# FASCICULE DE BREVET EUROPEEN

(11) **EP 0 793 330 B1**
(45) Date de publication et mention de la délivrance du brevet: **25.10.2000**
(21) Numéro de dépôt: 97400416.0
(22) Date de dépôt: 26.02.1997
(51) Int. Cl.: H02K 7/18, H02K 49/10

(54) **Générateur d'énergie électrique en ligne autonome**
Autonomer Generator zur Erzeugung elektrischer Energie
Autonomous electrical energy generator

(30) Priorité: 28.02.1996 FR 9602495
(43) Date de publication de la demande: 03.09.1997
(73) Titulaire: Elf Exploration Production, 92400 Courbevoie (FR)
(72) Inventeur: Roland, Louis, 78170 La Celle Saint Cloud (FR)
(74) Mandataire: Timoney, Ian Charles Craig

(56) Documents cités:
- EP-A- 0 462 724
- WO-A-91/02399
- WO-A-92/05350
- DE-A- 3 545 214
- FR-A- 2 686 376
- US-A- 4 134 024
- US-A- 5 209 650

## Description

### DOMAINE TECHNIQUE

La présente invention concerne un générateur d'énergie électrique en ligne autonome fonctionnant à partir de l'énergie mécanique prélevée sur un fluide qui circule dans une conduite.

Elle trouve son application dans les réseaux de transport et de distribution de gaz et/ou de liquides au moyen de canalisations, sur les plates-formes en mer, les sites sous-marins et les sites terrestres isolés de production d'hydrocarbures, dans l'agriculture et d'une manière générale sur tous les sites où l'on a besoin d'électricité et sur lesquels de l'énergie mécanique sous forme de fluide sous pression est disponible.

### ETAT DE LA TECHNIQUE ANTERIEURE

Sur de nombreux sites industriels ou agricoles, de l'énergie mécanique est disponible sous forme d'un fluide liquide ou gazeux qui circule dans une canalisation. Sur ces sites on a généralement besoin d'électricité pour alimenter par exemple des équipements de télémesures, télécontrôle, télécommunications ou de conditionnement d'air.

La production locale d'énergie électrique est particulièrement intéressante sur les sites isolés pour éviter la pose de câbles, coûteuse ou techniquement irréalisable.

L'invention décrite dans le brevet FR 2 686 376, propose pour transformer l'énergie mécanique d'un fluide en mouvement en électricité, un turbo-alternateur entraîné par un gaz, un liquide ou un mélange gaz/liquide circulant dans une canalisation.

Ce turbo-alternateur est constitué d'un ensemble monobloc comprenant une turbine d'angle dont la roue est solidaire en rotation du rotor d'un alternateur. Il comporte en outre des paliers et un joint mécanique d'étanchéité et d'équipression qui isole le fluide moteur de l'huile baignant le rotor. Le rotor de l'alternateur placé à l'extérieur de la canalisation est noyé dans un circuit de refroidissement par huile sous pression.

Les axes d'entrée et de sortie du fluide moteur sont orthogonaux ce qui rend impossible le montage du générateur dans une portion rectiligne de canalisation.

Ce générateur, pour être utilisable avec un fluide à haute pression, doit comporter un corps à parois très épaisses pour résister à la pression, ce qui conduit à un ensemble très lourd et très coûteux. De ce fait, il exige un supportage vertical délicat source de vibrations, et d'une usure des paliers et du joint mécanique étanchéité. Il en résulte la nécessité d'une surveillance, d'une maintenance fréquente et/ou une faible longévité, très pénalisantes sur les plans opérationnel et financier.

Pour certaines applications, telle que la production de pétrole en mer, le poids des équipements est déterminant car il induit des coûts très importants d'infrastructures pour les supporter.

Ce générateur comporte de plus des traversées de paroi par des câbles et un circuit extérieur de refroidissement par huile, qui complique le montage et crée des risques de fuite du liquide sous pression. Pour des applications dans lesquelles le fluide est dangereux par sa toxicité et/ou son inflammabilité, ce générateur ne présente pas des garanties de sécurité suffisantes.

### EXPOSE DE L'INVENTION

La présente invention a justement pour objet de remédier à ces inconvénients et de fournir un générateur électrique en ligne autonome fonctionnant à partir de l'énergie mécanique prélevée sur un fluide en circulation dans une canalisation.

Le générateur électrique de l'invention se monte sur une partie rectiligne de cette canalisation, donc sans modification de sa forme longitudinale et cylindrique.

Il fonctionne avec des fluides liquides ou gazeux, ou avec des mélanges liquide/gaz, pouvant contenir des particules solides. C'est le cas des fluides rencontrés dans la production des hydrocarbures.

Le générateur électrique de l'invention ne comporte pas de circuit de graissage et de refroidissement à huile sous pression. Il ne comporte aucun joint mécanique d'étanchéité ni d'équipression ni de passage étanche de fils électriques, ce qui le rend apte à une utilisation avec des fluides dangereux à haute pression en toute sécurité.

Le faible poids du générateur de l'invention par rapport aux systèmes connus réduit ou élimine la nécessité d'un supportage spécifique et les vibrations. Il en résulte un équipement rustique, sans surveillance ni maintenance, une grande durée de vie sans intervention (plusieurs années requises en cas d'applications sous-marines), une facilité et une rapidité de transport, de manutention, d'installation en position verticale ou horizontale. L'ensemble ainsi obtenu est économique par construction et en exploitation. De par sa conception il se prête éventuellement à un usage bidirectionnel.

A ces fins le générateur d'énergie électrique en ligne autonome de l'invention comporte d'une part, placé à l'intérieur d'un tronçon d'une conduite dans laquelle circule un fluide, un équipage mobile interne muni d'au moins un aimant permanent, de moyens d'entraînement mécanique sur lesquels agit le fluide en circulation, des paliers, et d'autre part un stator comprenant un circuit magnétique fixe muni d'au moins une bobine d'induction caractérisé en ce que ledit stator est placé autour de la conduite et en ce que le tronçon de conduite à l'intérieur duquel est placé l'équipage mobile interne est réalisé en matériau amagnétique et présente une épaisseur suffisante pour résister à la pression du fluide circulant dans la conduite.

Selon un mode particulier de réalisation de l'invention, le stator est positionné longitudinalement en regard de l'aimant permanent de l'équipage mobile interne.

Selon un autre mode de réalisation le générateur électrique de l'invention comporte en outre un équipage mobile externe de forme cylindrique creuse, placé entre la conduite et le stator, réalisé en matériau ferromagnétique, muni d'au moins un aimant permanent sur sa face extérieure, positionné longitudinalement en regard du stator et d'au moins un aimant permanent sur sa face intérieure positionné longitudinalement en regard de l'aimant permanent de l'équipage mobile interne de manière à ce que l'équipage mobile externe soit entraîné magnétiquement en rotation par l'équipage mobile interne.

Selon un autre mode de réalisation de l'invention, le stator étant décalé longitudinalement par rapport à l'aimant permanent de l'équipage mobile interne, le générateur électrique comporte en outre un équipage mobile externe, placé entre la conduite et le stator, réalisé au moins partiellement en matériau ferromagnétique, muni d'au moins un aimant permanent sur sa face extérieure, positionné longitudinalement en regard du stator et d'au moins un aimant permanent sur sa face intérieure, positionné longitudinalement en regard de l'aimant permanent de l'équipage mobile interne de manière à ce que l'équipage mobile externe soit entraîné magnétiquement en rotation par l'équipage mobile interne.

Selon un autre mode particulier de réalisation de l'invention les moyens d'entraînement mécaniques de l'équipage mobile interne comprennent une turbine et des moyens d'accouplement mécaniques.

Selon une autre caractéristique le générateur de l'invention comporte placés au voisinage des extrémités de l'équipage mobile interne des joints annulaires d'étanchéité qui empêchent la circulation du liquide dans l'espace compris entre la paroi extérieure de l'équipage mobile interne et la paroi interne de la conduite dans laquelle circule le fluide et l'équipage mobile interne comporte des évidements longitudinaux, internes à celui-ci, de passage de fluide.

Selon un mode particulier de l'invention l'équipage mobile interne est un cylindre comportant à sa périphérie des ailettes hélicoïdales.

Selon un autre mode particulier de réalisation de l'invention l'équipage mobile interne est un cylindre creux qui comporte sur sa paroi interne des ailettes hélicoïdales constituant les moyens d'entraînement mécaniques dudit équipage.

Selon une autre caractéristique le générateur électrique de l'invention comporte, placés au voisinage des extrémités de l'équipage mobile interne, des joints annulaires d'étanchéité qui empêchent la circulation du liquide dans l'espace compris entre la paroi extérieure de l'équipage mobile interne cylindrique creux et la paroi interne de la conduite dans laquelle circule le fluide.

Selon une dernière caractéristique le générateur électrique de l'invention comporte des paliers et butées magnétiques ou céramiques qui supportent les équipages mobiles internes et/ou externes.

Le faible poids du générateur de l'invention comparé à celui des générateurs connus résulte du montage du stator à l'extérieur de la conduite étanche dans laquelle circule le fluide sous pression.

Ainsi seul le rotor du générateur, monté à l'intérieur de la conduite, est soumis à la pression du fluide, ce qui évite une enceinte et des boites de sortie de câbles devant résister à cette pression, donc lourdes, pour y enfermer le stator.

### BREVE DESCRIPTION DES DESSINS

Les caractéristiques techniques et avantages de la présente invention apparaîtront plus clairement à la lecture de la description ci-après faite en référence aux dessins annexés dans lesquels :
- les figures 1a et 1b représentent, respectivement en coupe longitudinale et transversale, schématiquement un générateur d'énergie électrique dont la bobine d'induction est placée à l'extérieur de la conduite de fluide sous pression.
- les figures 2a et 2b représentent, respectivement en coupe longitudinale et transversale, schématiquement un générateur d'énergie électrique dont le rotor et le stator sont extérieurs à la conduite de fluide sous pression, le rotor étant entraîné magnétiquement par un équipage mobile placé dans la conduite.
- la figure 3 représente schématiquement un générateur d'énergie électrique dont le rotor et le stator sont décalés longitudinalement.
- la figure 4 représente un équipage mobile interne d'un générateur d'énergie électrique qui comporte à sa périphérie des ailettes hélicoïdales.
- la figure 5 représente schématiquement un équipage mobile interne d'un générateur d'énergie électrique, en forme de cylindre creux comportant des ailettes hélicoïdales, et des joints d'étanchéités à ses extrémités.

### DESCRIPTION DETAILLEE DE L'INVENTION

D'une manière générale l'invention a pour objet un générateur destiné à produire de l'énergie électrique à partir de l'énergie cinétique d'un fluide circulant dans une conduite 9 sous pression.

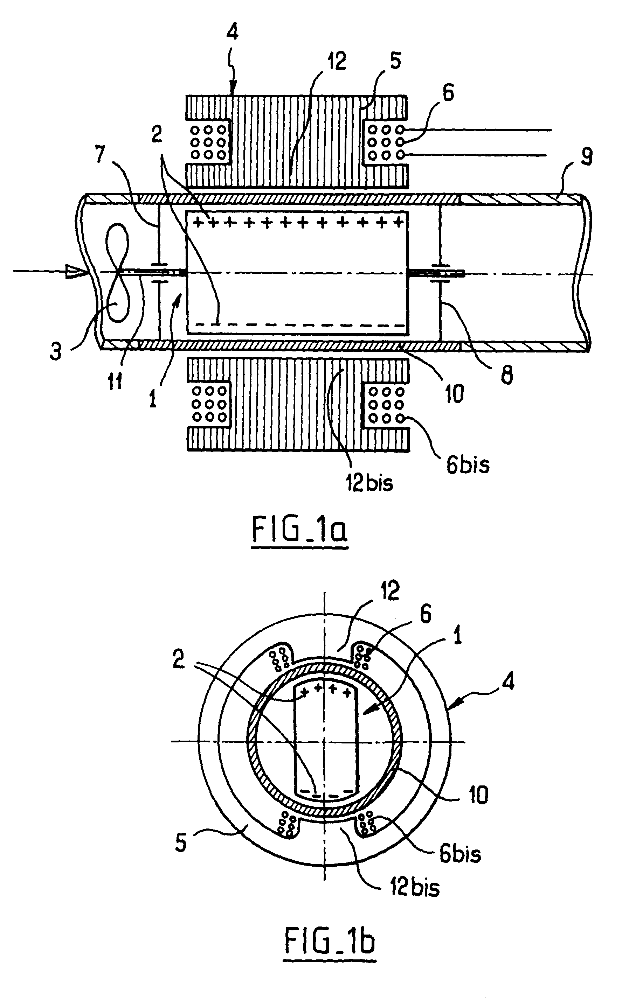

Selon le mode de réalisation représenté sur les figures 1a et 1b le générateur d'électricité comporte :
- un équipage 1 mobile interne muni d'un aimant 2 permanent et d'un axe 11
- des moyens 3 d'entraînement mécanique de l'équipage 1 mobile
- des paliers 7 et 8 de l'équipage 1 mobile.
- un stator 4 comprenant : un circuit 5 magnétique muni de 2 pièces 12 et 12bis polaires, deux bobines 6 et 6bis d'induction

L'équipage 1 mobile supporté par les paliers 7 et 8 est monté à l'intérieur de la conduite 9. Il est couplé mécaniquement par l'axe 11 à la turbine 3 sur laquelle agit le fluide qui circule dans la conduite 9. Le stator 4 du générateur est monté à l'extérieur de la conduite 9 et positionné longitudinalement en regard de l'aimant 2 permanent. Le tronçon 10 de la conduite 9, au niveau duquel sont montés le stator 4 et l'équipage mobile 1 est réalisé en matériau amagnétique tel que le titane.

L'épaisseur de ce tronçon 10 de la conduite 9 est calculé pour qu'il résiste à la pression interne de la conduite 9.

Les paliers 7 et 8 ont pour fonction de supporter les effets radiaux et axiaux, statiques, dynamiques et thermiques auxquels est soumis l'équipage mobile interne.

Le stator 4 est supporté par des moyens mécaniques adaptés non représentés sur les figures 1a et 1b, dans le but de maintenir ce stator dans une position fixe par rapport à la conduite 9.

Le fluide en circulation dans la conduite 9 agit sur la turbine 3 pour créer un mouvement de rotation de l'équipage 1 mobile, qui supporte l'aimant 2 permanent. Le passage de l'aimant 2 en face des pièces polaires 12 et 12bis du circuit 5 magnétique, produit un champ magnétique variable dans ces circuits, qui a pour effet de produire une tension électrique dans les bobines 6 et 6bis d'induction.

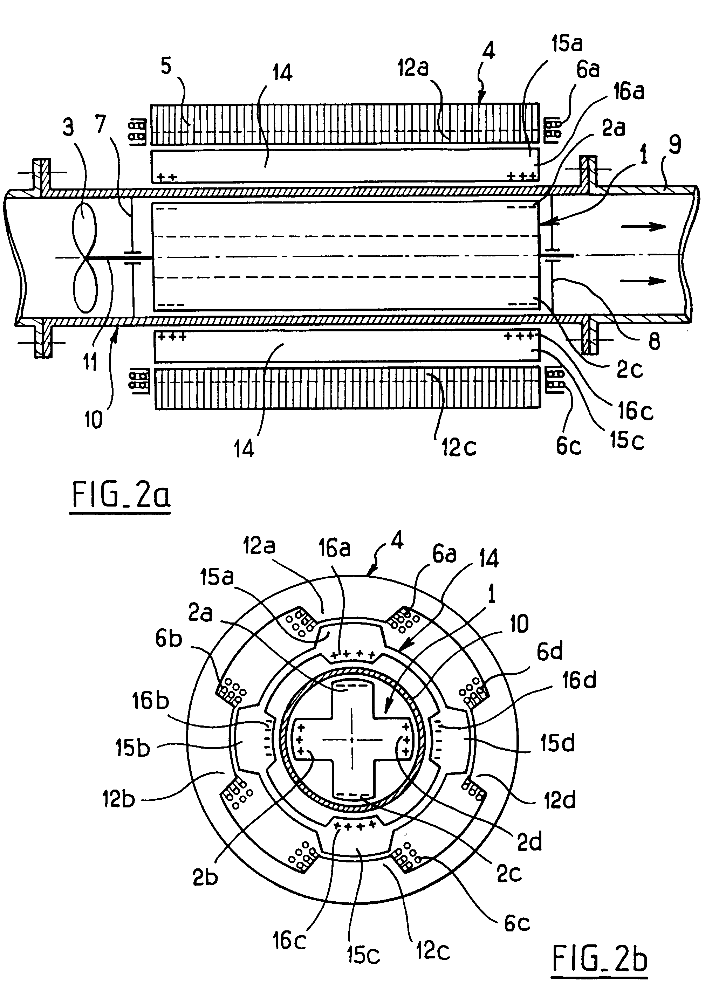

Selon un deuxième mode de réalisation, le générateur d'énergie électrique représenté sur les figures 2a et 2b comporte :
- un équipage 1 mobile interne muni de quatre aimants 2a, 2b, 2c, 2d
- une turbine 3 d'entraînement mécanique de l'équipage 1 mobile
- un stator 4 comprenant un circuit 5 magnétique muni de quatre pièces 12a, 12b, 12c, 12d polaires et quatre bobines 6a, 6b, 6c, 6d d'induction.
- des paliers 7 et 8 de l'équipage 1 mobile interne
- un équipage 14 mobile externe
- quatre aimants 15a, 15b, 15c, 15d permanents extérieurs
- quatre aimants 16a, 16b, 16c, 16d permanents intérieurs.

L'équipage 14 mobile externe, supporté par des moyens adaptés non représentés, est monté à l'extérieur de la conduite 9.

L'équipage 1 mobile interne, supporté par les paliers 7 et 8, est monté à l'intérieur d'un tronçon 10 de la conduite 9 réalisé en matériau amagnétique, et couplé mécaniquement à la turbine 3.

Le stator 4 du générateur est monté à l'extérieur de la conduite 9 et positionné longitudinalement en regard des aimants 15a, 15b, 15c, 15d, 16a, 16b, 16c, 16d de l'équipage 4 mobile externe et des aimants 2a, 2b, 2c, 2d de l'équipage 1 mobile interne.

L'équipage 1 mobile interne est entraîné mécaniquement par la turbine 3 sur laquelle agit le fluide qui circule dans la conduite 9.

Cet équipage 1 entraîne lui-même, par couplage magnétique, l'équipage 14 mobile externe, grâce à l'interaction entre les quatre aimants 2a, 2b, 2c, 2d et les quatre aimants 16a, 16b, 16c, 16d respectivement.

Les aimants 15a, 15b, 15c, 15d, portés à la périphérie par l'équipage 14 mobile externe, passent successivement devant les pièces 12a, 12b, 12c, 12d polaires du circuit magnétique 5 fixe du stator 4. Ces passages d'aimants créent des flux magnétiques variables au travers des bobines 6a, 6b, 6c, 6d d'induction supportées par les pièces polaires, ce qui a pour effet de produire des tensions électrique dans ces bobines.

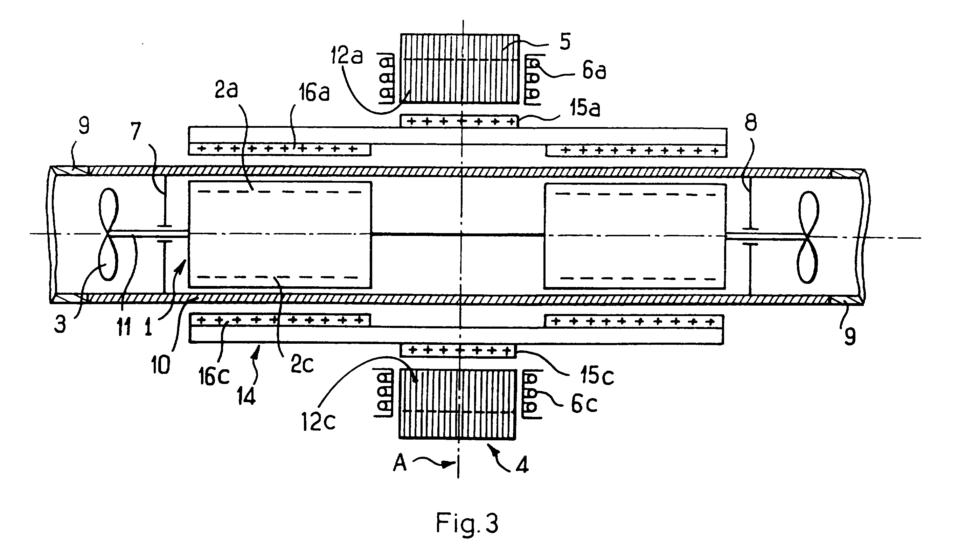

Selon un autre mode particulier de réalisation de l'invention représenté schématiquement figure 3, le générateur électrique comporte les mêmes éléments que le générateur réalisé selon le deuxième mode de réalisation, mais disposés différemment comme suit :
- Les aimants 1a, 1b, 1c et 1d de l'équipage 14 mobile externe sont positionnés longitudinalement en regard des aimants 2a, 2b, 2c et 2d de l'équipage 1 mobile interne
- Les aimants 15a, 15b, 15c et 15d, placés à la périphérie de l'équipage 14 externe sont décalés longitudinalement par rapport aux aimants 16a, 16b, 16c et 16d ainsi que les pièces 12a, 12b, 12c et 12d polaires du stator 4.

Pour améliorer l'équilibrage mécanique des équipages 1 et 14 mobiles interne et externe, ces équipages seront avantageusement réalisés en deux parties, chacune d'elles étant disposée symétriquement par rapport au plan A du symétrie du stator 4 perpendiculaire à l'axe de la conduite 9.

Grâce à cette disposition les vibrations mécaniques des deux équipages 1 et 14 mobiles seront réduites.

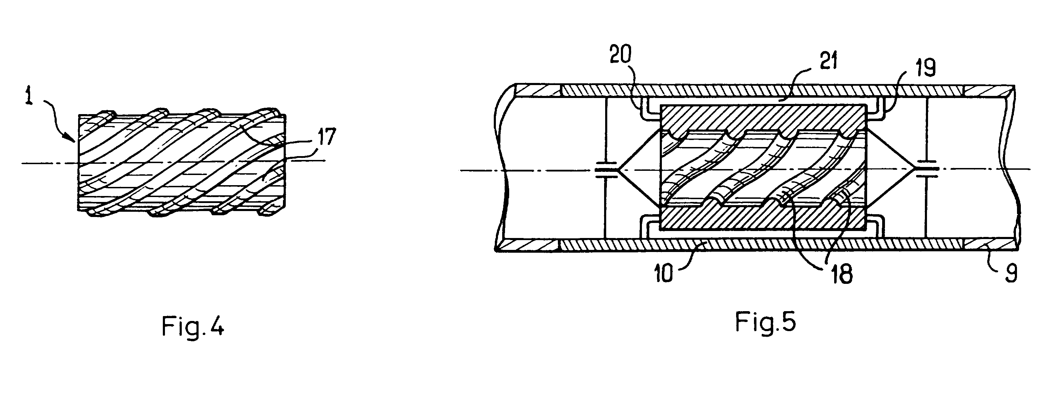

Selon un mode particulier de réalisation représenté figure 4 l'équipage 1 mobile interne est un cylindre plein muni d'ailettes 17 hélicoïdales. L'action du fluide en circulation dans la conduite 9 sur ces ailettes 17 entraîne en rotation cet équipage 1 mobile interne.

Selon un mode de réalisation représenté figure 5, l'équipage 1 mobile interne est un cylindre creux dont la paroi intérieure est munie d'ailettes 18 hélicoïdales. Ce fluide en circulation dans la conduite 9 passant au travers de la partie creuse de l'équipage 1 mobile interne agit sur les ailettes 18 hélicoïdales, ce qui a pour effet d'entrainer cet équipage en rotation.

Sur la figure 5, figurent également des joints 19 et 20 annulaires qui empêchent les particules solides, contenues dans le fluide en circulation dans la conduite 9, de passer dans l'espace 21 entre la paroi externe de l'équipage 1 mobile interne et la paroi interne du tronçon 10 de la conduite 9, ce qui aurait pour effet de bloquer l'équipage 1 mobile.

Le générateur électrique de l'invention, pourra être avantageusement monté en aval de dispositifs de filtration et de tranquillisation de la veine fluide.

## Revendications

1. Générateur d'énergie électrique en ligne autonome comportant, d'une part, placé à l'intérieur d'un tronçon (10) d'une conduite (9) dans laquelle circule un fluide, un équipage (1) mobile interne muni d'au moins un aimant (2) permanent, de moyens (3) d'entraînement mécanique sur lesquels agit le fluide en circulation, des paliers (7 et 8) et d'autre part un stator (4) comprenant un circuit (5) magnétique fixe muni d'au moins une bobine (6) d'induction caractérisé en ce que ledit stator (4) est placé autour de la conduite (9) et en ce que le tronçon (10) de conduite à l'intérieur duquel est placé l'équipage (1) mobile interne est réalisé en matériau amagnétique et présente une épaisseur suffisante pour résister à la pression du fluide circulant dans la conduite (9).

2. Générateur selon la revendication 1 caractérisé en ce que, le stator (4) est positionné longitudinalement en regard de l'aimant (2) permanent de l'équipage (1) mobile interne.

3. Générateur selon la revendication 2 caractérisé en ce qu'il comporte en outre un équipage (14) mobile externe de forme cylindrique creuse, placé entre la conduite (9) et le stator (4), réalisé en matériau ferromagnétique, muni d'au moins un aimant (15a) permanent sur sa face extérieure, positionné longitudinalement en regard du stator (4) et d'au moins un aimant (16a) permanent sur sa face intérieure positionné longitudinalement en regard de l'aimant (2a) permanent de l'équipage (1) mobile interne de manière à ce que l'équipage (14) mobile externe soit entraîné magnétiquement en rotation par l'équipage (1) mobile interne.

4. Générateur selon la revendication 1 caractérisé en ce que, le stator (4) étant décalé longitudinalement par rapport à l'aimant (2) permanent de l'équipage (1) mobile interne, il comporte en outre un équipage (14) mobile externe, placé entre la conduite (9) et le stator (4), réalisé au moins partiellement en matériau ferromagnétique, muni d'au moins un aimant (15a) permanent sur sa face extérieure, positionné longitudinalement en regard du stator (4) et d'au moins un aimant (16a) permanent sur sa face intérieure positionné longitudinalement en regard de l'aimant (2a) permanent de l'équipage (1) mobile interne de manière à ce que l'équipage (14) mobile externe soit entraîné magnétiquement en rotation par l'équipage (1) mobile interne.

5. Générateur selon l'une quelconque des revendications 1 à 4 caractérisé en ce que les moyens d'entraînement mécaniques de l'équipage (1) mobile interne comprennent une turbine (3) et des moyens (11) d'accouplement mécaniques.

6. Générateur selon l'une quelconque des revendications 1 à 5 caractérisé en ce qu'il comporte placés au voisinage des extrémités de l'équipage (1) mobile interne des joints (19 et 20) annulaires d'étanchéité qui empêchent la circulation du liquide dans l'espace (21) compris entre la paroi extérieure de l'équipage (1) mobile interne et la paroi interne de la conduite (9) dans laquelle circule le fluide et en ce que l'équipage (1) mobile interne comporte des évidements longitudinaux internes de passage du fluide.

7. Générateur selon l'une quelconque des revendications 1 à 4 caractérisé en ce que l'équipage (1) mobile interne est un cylindre qui comporte à sa périphérie des ailettes (17) hélicoïdales.

8. Générateur selon l'une quelconque des revendications 1 à 4 caractérisé en ce que l'équipage (1) mobile interne est un cylindre creux qui comporte sur sa paroi interne des ailettes (18) hélicoïdales constituant les moyens d'entraînement mécaniques dudit équipage (1).

9. Générateur selon la revendication 8 caractérisé en ce qu'il comporte placés au voisinage des extrémités de l'équipage (1) mobile interne des joints (19 et 20) annulaires d'étanchéité qui empêchent la circulation du liquide dans l'espace (21) compris entre la paroi extérieure de l'équipage (1) mobile interne et la paroi interne de la conduite (9) dans laquelle circule le fluide.

10. Générateur selon l'une quelconque des revendications 1 à 9 caractérisé en ce qu'il comporte des paliers et butées magnétiques ou céramiques qui supportent l'équipage (1) mobile interne et/ou l'équipage (14) mobile externe.

## Patentansprüche

1. Netzunabhängiger elektrischer Generator, der einerseits, im Innern eines Abschnitts (10) eines Leitungsrohrs (9), in dem ein Fluid strömt, eine bewegliche innere Einheit (1) mit mindestens einem Dauermagneten (2), mechanische Antriebseinrichtungen (3), auf die das strömende Fluid wirkt, und Lager (7 und 8), und andererseits einen Stator (4) mit einem festen, mindestens eine Induktionsspule (6) aufweisenden Elektromagneten (5) aufweist, dadurch gekennzeichnet, daß der Stator (4) um das Leitungsrohr (9) herum angeordnet ist und der Rohrleitungsabschnitt (10), in dessen Innern die bewegliche innere Einheit (1) angeordnet ist, aus nichtmagnetischem Material gefertigt ist und eine Dicke hat, die dem Druck des in der Rohrleitung (9) strömenden Fluids widersteht.

2. Generator nach Anspruch 1, dadurch gekennzeichnet, daß der Stator (4) in bezug auf den Dauermagneten (2) der beweglichen inneren Einheit (1) in Längsrichtung angeordnet ist.

3. Generator nach Anspruch 2, dadurch gekennzeichnet, daß er außerdem eine bewegliche äußere Einheit (14) in der Form eines Hohlzylinders aufweist, die zwischen dem Leitungsrohr (9) und dem Stator (4) angeordnet ist, aus ferromagnetischem Material gefertigt ist, mindestens einen Dauermagneten auf seiner Außenoberfläche, der in bezug auf den Stator (4) in Längsrichtung ausgerichtet ist, und mindestens einen Dauermagneten (16a) auf seiner Innenoberfläche, der in bezug auf den Dauermagneten (2a) der beweglichen inneren Einheit (1) in Längsrichtung ausgerichtet ist, aufweist, so daß die bewegliche äußere Einheit (14) magnetisch durch die bewegliche innere Einheit (1) rotierend angetrieben wird.

4. Generator nach Anspruch 1, dadurch gekennzeichnet, daß, während der Stator (4) in Längsrichtung gegenüber dem Dauermagneten (2) der beweglichen inneren Einheit (1) versetzt ist, er außerdem eine bewegliche äußere Einheit (14) aufweist, die zwischen der Rohrleitung (9) und dem Stator (4) angeordnet ist, der mindestens zum Teil aus einem ferromagnetischen Material gefertig ist, mindestens einen Dauermagneten (15a) auf seiner Außenoberfläche, der in bezug auf den Stator (4) in Längsrichtung ausgerichtet ist, und mindestens einen Dauermagneten (16a) auf seiner Innenoberfläche, der in bezug auf den Dauermagneten (2a) der beweglichen inneren Einheit (1) in Längsrichtung angeordnet ist, aufweist, so daß die bewegliche äußere Einheit magnetisch durch die bewegliche innere Einheit (1) rotierend angetrieben wird.

5. Generator nach einem der Ansprüche 1 bis 4, dadurch gekennzeichnet, daß die mechanischen Antriebseinrichtungen der beweglichen inneren Einheit (1) eine Turbine (3) und mechanische Kopplungseinrichtungen (11) aufweisen.

6. Generator nach einem der Ansprüche 1 bis 5, dadurch gekennzeichnet, daß er in der Nähe der Enden der beweglichen inneren Einheit (1) ringförmige Dichtungen (19 und 20) aufweist, die ein Strömen der Flüssigkeit in einem Raum (21) zwischen der Außenwand der beweglichen inneren Einheit (1) und der Innenwand des Leitungsrohrs (9), in dem das Fluid strömt, verhindert, und dadurch, daß die bewegliche innere Einheit (1) innere Fluid-Längsdurchgänge aufweist.

7. Generator nach einem der Ansprüche 1 bis 4, dadurch gekennzeichnet, daß die bewegliche innere Einheit (1) ein Zylinder ist, der auf seiner Außenoberfläche schraubenförmig angeordnete Schaufeln (17) aufweist.

8. Generator nach einem der Ansprüche 1 bis 4, dadurch gekennzeichnet, daß die bewegliche innere Einheit (1) ein Hohlzylinder ist, der auf seiner Innenwand schraubenförmig angeordnete Schaufeln (18) aufweist, die die mechanischen Antriebseinrichtungen der Einheit (1) darstellen.

9. Generator nach Anspruch 8, dadurch gekennzeichnet, daß er in der Nähe der Enden der beweglichen inneren Einheit (1) angeordnete Ringdichtungen (19 und 20) aufweist, die ein Strömen der Flüssigkeit in einem Raum (21) zwischen der Außenwand der beweglichen inneren Einheit (1) und der Innenwand des Leitungsrohrs (9), in dem das Fluid strömt, verhindert.

10. Generator nach einem der Ansprüche 1 bis 9, dadurch gekennzeichnet, daß er Lager und Magnet- oder Keramiklager aufweist, auf denen die bewegliche innere Einheit (1) und/oder die bewegliche äußere Einheit (14) gelagert sind.

## Claims

1. Standalone linear electric power generator comprising, on the one hand, placed inside a portion (10) of a pipe (9) in which a fluid circulates, an internal moving element (1) equipped with at least one permanent magnet (2), mechanical driving means (3) on which the circulating fluid acts, bearings (7 and 8) and, on the other hand, a stator (4) comprising a stationary magnetic circuit (5) equipped with at least one induction coil (6), characterised in that said stator (4) is placed round the pipe (9) and in that the portion (10) of pipe inside which the internal moving element (1) is placed is produced from non-magnetic material and has a thickness which is sufficient to resist the pressure of the fluid circulating in the pipe (9).

2. Generator according to claim 1, characterised in that the stator (4) is positioned longitudinally with respect to the permanent magnet (2) of the internal moving element (1).

3. Generator according to claim 2, characterised in that it also comprises an external moving element (14) of hollow cylindrical shape placed between the pipe (9) and the stator (4), produced from ferromagnetic material, equipped with at least one permanent magnet (15a) on its external face, positioned longitudinally with respect to the stator (4) and with at least one permanent (16a) on its internal face, positioned longitudinally with respect to the permanent magnet (2a) of the internal moving element (1) in such a way that the external moving element (14) is set into rotation magnetically by the internal moving element (1).

4. Generator according to claim 1, characterised in that, as the stator (4) is longitudinally offset relative to the permanent magnet (2) of the internal moving element (1), it also comprises an external moving element (14) placed between the pipe (9) and the stator (4), produced at least partially from ferromagnetic material, equipped with at least one permanent magnet (15a) on its external face, positioned longitudinally with respect to the stator (4) and with at least one permanent magnet (16a) on its internal face, positioned longitudinally with respect to the permanent magnet (2a) of the internal moving element (1) in such a way that the external moving element (14) is set into rotation magnetically by the internal moving element.

5. Generator according to any one of claims 1 to 4, characterised in that the mechanical driving means of the internal moving element (1) comprise a turbine (3) and mechanical coupling means (11).

6. Generator according to any one of claims 1 to 5, characterised in that it comprises, placed in the vicinity of the ends of the internal moving element (1), annular gaskets (19 and 20) which prevent the circulation of the liquid in the space (21) contained between the external wall of the internal moving element (1) and the internal wall of the pipe (9) in which the fluid circulates and in that the internal moving element (1) comprises longitudinal internal recesses for passage of the fluid.

7. Generator according to any one of claims 1 to 4, characterised in that the internal moving element (1) is a cylinder comprising helical ribs (17) at its periphery.

8. Generator according to any of claims 1 to 4 characterised in that the internal moving element (1) is a hollow cylinder comprising helical ribs (18) on its internal wall, constituting the mechanical means of drive of the aforesaid internal moving element (1).

9. Generator according to claim 8 characterised in that it comprises, placed in the vicinity of the ends of the internal moving element (1), annular gaskets (19 and 20) which prevent the circulation of the liquid in the space (21) contained between the external wall of the internal moving element (1) and the internal wall of the pipe (9) in which the fluid circulates.

10. Generator according to any of claims 1 to 9 characterised in that it comprises, bearings and thrusts magnetic or ceramics which supports the internal moving element (1) and/or the external moving element (14).
